# EUROPÄISCHE PATENTANMELDUNG

(11) **EP 2 080 782 A1**
(43) Veröffentlichungstag der Anmeldung: **22.07.2009**
(21) Anmeldenummer: 08171879.3
(22) Anmeldetag: 17.12.2008
(51) Int. Cl.: C08K 5/40, C08K 7/22, C08K 7/28, C08L 21/00, B60C 1/00

(54) **Kautschukmischung mit verbesserter Steifigkeit**

(30) Priorität: 18.01.2008 DE 102008004951
(71) Anmelder: Continental Aktiengesellschaft, 30165 Hannover (DE)
(72) Erfinder: Weinreich, Hajo, 31840 Hessisch Oldendorf (DE)
(74) Vertreter: Finger, Karsten

(57) **Zusammenfassung**

Die Erfindung betrifft eine Kautschukmischung mit verbessertem Steifigkeitsverhalten bei hohen Temperaturen, insbesondere für Fahrzeugreifen, Riemen und Gurte.

Die Kautschukmischung hat folgende Zusammensetzung:
- 30 - 100 phr zumindest eines Dienkautschukes;
- 0,1 - 10 phr zumindest eines Vulkanisationsbeschleunigers ausgewählt aus der Gruppe, enthaltend: Thiazolbeschleuniger und / oder Mercaptobeschleuniger, Sulfenamidbeschleuniger und / oder Guanidinbeschleuniger und /oder Thiurambeschleuniger und / oder Dithiocarbamatbeschleuniger und / oder Aminbeschleuniger und / oder Thioharnstoffe und / oder sonstige Beschleuniger;
- 0 - 150 phr zumindest einer amorphen und / oder Fällungskieselsäure;
- 5 - 100 phr zumindest eines weiteren hydroxylgruppenhaltigen Füllstoffes;
- 0,1 - 20 phr zumindest eines Kupplungsagenz;
- 1 - 100 phr zumindest eines Rußes;
- 2 - 200 phr weitere Zusatzstoffe.

## Beschreibung

Die Erfindung betrifft eine Kautschukmischung mit verbessertem Steifigkeitsverhalten bei hohen Temperaturen, insbesondere für Fahrzeugreifen, Riemen und Gurte.

Zur Beeinflussung der Mischungs- und Vulkanisateigenschaften werden der Kautschukmischung unterschiedlichste Zuschlagstoffe beigemischt und/oder es werden spezielle Polymere verwendet. Als Zuschlagstoffe seien beispielhaft an dieser Stelle Füllstoffe, z. B. Ruß, Kieselsäure und weitere, Weichmacher, Alterungsschutzmittel und Vernetzungssysteme aus Schwefel, Beschleuniger und Aktivator genannt. Wird durch Variation der Mischung eine Eigenschaft verbessert, geht dies aber häufig mit einer Verschlechterung einer anderen Eigenschaft einher, so dass gewisse Zielkonflikte vorliegen. Bei Mischungen für Laufstreifen von Fahrzeugreifen bestehen solche Zielkonflikte beispielsweise im Hinblick auf das thermische Erweichung, der Steifigkeit bei erhöhten Temperaturen und des Dämpfungsverhaltens bzw. der Verstärkung.

Es ist beispielsweise bekannt, zur Erhöhung der Steifigkeit der Vulkanisate eines gegebenen Mischungssystems, gemessen über den Spannungswert bei Dehnung, den Füllgrad, d.h. den Anteil an Füllstoff in der Mischung, zu erhöhen, einen Füllstoff mit aktiver Oberfläche zu verwenden, die Vernetzungsdichte zu erniedrigen oder ein spezielles Polymersystem zu verwenden. Die vorgenannten Maßnahmen führen dabei aber zwangsläufig zu einer Erhöhung der häufig unerwünschten thermischen Erweichung der Vulkanisate.

Eine wichtige Zuschlagstoffgruppe, die unter anderen auf die Vernetzungsdichte und die physikalischen Eigenschaften der Vulkanisate Einfluss hat, ist die Gruppe der Vulkanisationsbeschleuniger. Für die Vulkanisation von Kautschukmischungen, die für die Herstellung von Fahrzeugreifen Verwendung finden, stehen verschiedene, dem Fachmann bekannte, Vulkanisationsbeschleunigergruppen zur Verfügung, die auch in Kombination miteinander eingesetzt werden können, wobei sich synergistische Effekte ergeben können. Die Vulkanisationsbeschleuniger dienen hierbei zur Aktivierung des als Vulkanisationsmittel eingesetzten Schwefels.

Der Stand der Technik soll nun anhand folgender Druckschriften näher beschrieben werden:
(D1) DE 42 20 563 A1
(D2) EP 0 854 170 B1
(D3) EP 1 063 259 A1
(D4) EP 0 857 751 A1

D1 beschreibt Kautschukmischungen, die ein Polybutadiengel A und andere C=C-Doppelbindungen enthaltende Kautschuke B enthält, wobei der Anteil an Polybutadiengel bezogen auf die Gesamtmenge aus A und B 1 bis 70 Gew. -% beträgt. Die Mischungen zeigen günstige Hystereseeigenschaften und Abriebbeständigkeit auf. Die dargelegten Ausführungsbeispiele beziehen sich auf Mischungen, die als Füllstoff nur Ruß enthalten.

Aus D2 sind Kautschukmischungen bekannt, die SBR-Kautschukgele A und andere C=C-Doppelbindungen enthaltende Kautschuke B enthalten, wobei der Anteil der SBR-Kautschukgele bezogen auf die Gesamtmenge aus A und B 1 bis 100 Gew. -% beträgt. Derartige Mischungen eignen sich gut für die Herstellung naßrutschfester und rollwiderstandsarmer Kfz-Reifenlaufflächen.

Kautschukmischungen mit mindestens einem doppelbindungshaltigen Kautschuk, mindestens einem Kautschukgel und mindestens einer schwefelhaltigen Organosiliciumverbindung sind aus D3 bekannt. Der Anteil an Kautschukgel beträgt 1 bis 150 Gew. -Teile. Diese Kautschukmischungen zeigen eine verbesserte Rollwiderstands- / Nassrutschfestigkeits-Relation bei Verwendung als "Laufflächen-compounds".

D4 bezieht sich auf eine mit Schwefel vernetzbare Kautschukmischung, insbesondere für Reifenlaufstreifen. Die Kautschukmischung enthält als Beschleunigersystem eine Kombination aus 0,1 bis 0,5 phr Tetrabenzylthiuramdisulfid und 1 bis 3 phr Benzothiazyl-2-cyclohexylsulfenamid. Durch diese Maßnahme lässt sich eine höhere Zugfestigkeit und Bruchdehnung der Vulkanisate erreichen.

Der Erfindung liegt daher die Aufgabe zugrunde, eine Kautschukmischung bereitzustellen, die den Zielkonflikt zwischen statischer Steifigkeit bei hohen Temperaturen und Dämpfung löst oder zumindest entschärft.

Gelöst wird diese Aufgabe durch eine Kautschukmischung mit folgender Zusammensetzung:
- 30 - 100 phr zumindest eines Dienkautschukes;
- 0,1 - 10 phr zumindest eines Vulkanisationsbeschleunigers ausgewählt aus der Gruppe, enthaltend: Thiazolbeschleuniger und / oder Mercaptobeschleuniger, Sulfenamidbeschleuniger und / oder Guanidinbeschleuniger und /oder Thiurambeschleuniger und / oder Dithiocarbamatbeschleuniger und / oder Aminbeschleuniger und / oder Thioharnstoffe und / oder sonstige Beschleuniger;
- 0 - 150 phr zumindest einer amorphen und / oder Fällungskieselsäure;
- 5 - 100 phr zumindest eines weiteren hydroxylgruppenhaltigen Füllstoffes;
- 0,1 - 20 phr zumindest eines Kupplungsagenz;
- 1 - 100 phr zumindest eines Rußes;
- 2 - 200 phr weitere Zusatzstoffe.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die Kombination zumindest eines Dienkautschuks mit zumindest einem Vulkanisationsbeschleunigers und mit zumindest einem hydroxylgruppenhaltigen Füllstoff, der nicht Kieselsäure ist, sich die Dämpfungseigenschaften verbessern, die thermische Erweichung verringert wird und die Steifigkeit bei hohen Temperaturen auf gleichem Niveau verbleibt. Dadurch ist es möglich den oben genannten Zielkonflikt zu entkoppeln. Dies gilt nicht nur für den Fahrzeuglaufstreifen, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen und Gurte, insbesondere für Fördergurte.
Im täglichen Einsatz unterliegt insbesondere die Laufseite von Fördergurten starken mechanischen Beanspruchungen, z. B. bei Umlenkung an Antriebs-, Umlenk- und / oder Knicktrommeln und Aushalten der auftretenden Zugkräfte. Daher sind gute Dämpfung und die statische Steifigkeit bei hohen oder erhöhten Temperaturen von großer Bedeutung.

Die Kautschukmischung enthält 30 - 100 phr zumindest eines Dienkautschuks.
Der Dienkautschuk ist ausgewählt aus der Gruppe bestehend aus natürlichem Polyisopren und / oder synthetischem Polyisopren und / oder Polyethylen und / oder Polybutadien und / oder Styrol-Butadien-Copolymer und / oder lösungspolymerisierte Styrol-Butadien-Copolymer und / oder emulsionspolymerisierte Styrol-Butadien-Copolymer und / oder Styrol-Isopren-Butadien-Terpolymer und / oder Butylkautschuk und / oder Halobutylkautschuk und / oder Ethylen-Propylen-Dien-Kautschuk und / oder Chloropren-Kautschuk.

Vorzugsweise enthält die Kautschukmischung 0 bis 30 phr, wenigstens aber 0,1 phr, insbesondere wenigstens 0,5 phr, natürliches und / oder synthetisches Polyisopren und / oder 0 bis 50 phr, wenigstens aber 0,1 phr, insbesondere wenigstens 0,5 phr, Butadienkautschuk (BR), bevorzugt einen high-cis Butadien-Kautschuk mit einem cis-Anteil von größer oder gleich 90 Gew. -%, und / oder 0 bis 100 phr, wenigstens aber 0,1 phr, insbesondere wenigstens 0,5 phr, Styrol-Butadienkautschuk (SBR).
Der SBR ist bevorzugt ein lösungspolymerisierten Styrol-Butadienkautschuk (SSBR) oder ein emulsionspolymerisierten Styrol-Butadienkautschuk (ESBR).

Dabei kann es sich sowohl um cis-1,4-Polyisopren als auch um 3,4-Polyisopren handeln. Bevorzugt ist allerdings die Verwendung von cis-1,4-Polyisoprenen mit einem
cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Enthält die Kautschukmischung Polybutadien (BR), handelt es sich bevorzugt um cis-1,4-Polybutadien mit einem cis-1,4-Anteil größer oder gleich 90 Gew.-%, welches z. B. durch Lösungspolymerisation in Anwesenheit von Katalysatoren vom Typ der seltenen Erden hergestellt werden kann. Es kann beispielsweise aber auch ein festes Polybutadien mit einem Vinyl-Anteil zwischen 10 - 70% verwendet werden.

Der oder die verwendeten oben genannten Dienkautschuk oder Dienkautschuke kann oder können hierbei mit primären oder sekundären Aminogruppen und / oder Alkoxysilylgruppen und / oder OH-Gruppen und / oder Epoxidgruppen und / oder Carboxylgruppen und / oder Mercaptogruppen und / oder weiteren, dem Fachmann bekannten, Gruppen modifiziert sein.

Des Weiteren kann die Kautschukmischung 0 - 50 phr, insbesondere 0,1 phr, insbesondere wiederum wenigstens 0,5 phr, zumindest eines weiteren polaren oder unpolaren Kautschuks enthalten.
Der polare oder unpolare Kautschuk ist herbei ausgewählt aus der Gruppe, bestehend aus Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer. Insbesondere zur Herstellung technischer Gummiartikel, abweichend von Fahrzeugreifen, werden diese Kautschuke Verwendung finden.

Erfindungswesentlich ist, dass die Kautschukmischung 0,1 - 10 phr, bevorzugt 0,1 - 5 phr, zumindest eines Vulkanisationsbeschleunigers in Kombination mit 5 - 100 phr, bevorzugt 10 - 80 phr, besonders bevorzugt 10 - 50 phr, zumindest eines weiteren hydroxylgruppenhaltigen Füllstoffs, der nicht Kieselsäure ist, enthält.

Der Vulkanisationsbeschleuniger ist hierbei ausgewählt aus der Gruppe bestehend aus: Thiazolbeschleuniger und / oder Mercaptobeschleuniger, Sulfenamidbeschleuniger und / oder Guanidinbeschleuniger und /oder Thiurambeschleuniger und / oder
Dithiocarbamatbeschleuniger und / oder Aminbeschleuniger und / oder Thioharnstoffe und / oder sonstige Beschleuniger. Bevorzugt ist allerdings, wenn der Vulkanisationsbeschleuniger ausgewählt ist aus der Gruppe der Thiurambeschleuniger wobei es sich in einer vorteilhaften Ausgestaltung um Tetrabenzylthiuramdisulfid (TBzTD) handelt.

Es ist allerdings durchaus möglich der Kautschukmischung noch weitere
Vulkanisationsbeschleuniger hinzuzufügen, insbesondere in Mengen von 0,1 - 5 phr. Diese Vulkanisationsbeschleuniger sind ausgewählt aus der Gruppe, bestehend aus Thiazolbeschleuniger, Mercaptobeschleuniger, Sulfenamidbeschleuniger, Guanidinbeschleuniger, Dithiocarbamatbeschleuniger, Aminbeschleuniger, Thioharnstoffe und / oder sonstige Beschleuniger.

Der weitere hydroxylgruppenhaltige Füllstoff kann aus keramischen Mikrohohlkugeln und / oder Hohlkugeln aus Glas und / oder Mikrogel bestehen.
Finden keramische Mikrohohlkugeln Verwendung, bevorzugt sind Alumosilikat-Keramiken, so sollten diese eine Mohs-Härte zwischen 6 und 8, einen ph-Wert, gemessen nach ASTM E70, von mindestens 3 und eine Dichte zwischen 2,0 und 2,6 g / cm³ haben. 95% der Partikel der keramischen Mikrohohlkugeln sollen eine Partikelgröße kleiner oder gleich 25µ haben.
Finden Hohlkugeln aus Glas Verwendung, so haben diese bevorzugt eine Dichte zwischen 0,2 und 0,7 g / cm³ und einen mittleren Durchmesser d₅₀ zwischen 15 und 60 nm.
Findet Mikrogel Verwendung, so hat dieses bevorzugt eine Dichte zwischen 0,9 und 1,1 g / cm³ und einen mittleren Durchmesser d₅₀ zwischen 15 und 60 nm.
Unter Mikrogelen versteht man polymere Füllstoffe auf der Basis von Kautschukgelen, die im Allgemeinen aus Partikeln von peroxidvernetzten Dienkautschuken (BR, SBR, IR usw.) bestehen. Die Mikrogel-Partikel werden häufig durch Emulsions-Polymerisation bzw. Suspensions-Polymerisation hergestellt.

In der Kautschukmischung ist amorphe und / oder Fällungskieselsäure in Mengen von 0 - 150 phr, bevorzugt in Mengen von 0 - 120 phr, wenigstens allerdings in Mengen von 0,1 phr, insbesondere wenigstens in Mengen von 0,5 phr, enthalten. Es können alle dem Fachmann bekannten Kieselsäuren verwendet werden, wobei es besonders vorteilhaft ist, wenn amorphe und / oder Fällungskieselsäure mit einer BET-Oberfläche von größer oder gleich 100 m² / g eingesetzt wird.
Die BET-Oberfläche ist die Stickstoff-Oberfläche gemäß DIN 66131 und DIN 66132 und dient der Charakterisierung vor allem der hellen Füllstoffe.

Des Weiteren enthält die Kautschukmischung ein Kupplungsagenz in Mengen von 0,1 - 20 phr, bevorzugt 0,1 - 15 phr, besonders bevorzugt 0,1 - 10 phr. Das Kupplungsagenz dient zur Verbesserung der Verarbeitbarkeit und zur Anbindung der Kieselsäure und des weiteren hydroxylgruppenhaltigen Füllstoffs an die Polymermatrix und reagiert mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Kupplungsagenz findet bevorzugt Silan Verwendung und es können dabei alle dem Fachmann bekannten Silan-Kupplungsagenzien verwendet werden.

Die Kautschukmischung enthält als dunklen Füllstoff 1 - 100 phr, bevorzugt 5 - 80 phr Ruß. Vorteilhaft ist es, wenn der Ruß eine DBP-Zahl größer oder gleich 55 cm³ / 100g besitzt. Die DBP-Zahl gemäß ASTM D 2414 bestimmt das spezifische Absorptionsvolumen eines Rußes oder eines hellen Füllstoffes mittels Dibutylphthalat.

Weitere Zusatzstoffe beinhaltet im Wesentlichen Weichmacher, Wachse, Alterungsschutzmittel, Mastikationshilfsmittel und Aktivatoren.
Der Mengenanteil der Gesamtmenge an Zusatzstoffen beträgt 2 bis 200 phr, bevorzugt 2 bis 150 phr, besonders bevorzugt 5 bis 100 phr.

Die erfindungsgemäße Kautschukmischung enthält weiterhin 10 - 160 phr zumindest eines Weichmacheröls, wobei das Weichmacheröl ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Die Vulkanisation wird bevorzugt in Anwesenheit von elementarem Schwefel durchgeführt. Der elementare Schwefel wird im letzten Mischungsschritt in den vom Fachmann gebräuchlichen Mengen von 0,2 - 6 phr der Kautschukmischung zugesetzt.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht. Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in der Tabelle 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile des festen Gesamtkautschuks bezogen sind. Die Vergleichsmischungen sind mit V1, V2 bzw. V3 gekennzeichnet, die erfindungsgemäße Mischung ist mit E gekennzeichnet. Die Mischung V1 stellt die Basismischung dar, in V2 wurde zusätzlich zu V1 ein Thiurambeschleuniger hinzugefügt, während in V3 zusätzlich zu V1 ein weiterer hydroxylgruppenhaltiger Füllstoff hinzugefügt wurde. Die Mischung E stellt dann das kombinierte zusätzliche Hinzufügen eines Thiurambeschleunigers und eines weiteren hydroxylgruppenhaltigen Füllstoffs zu V1 dar.

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt, die im unteren Teil der Tabelle 1 dargestellt ist. Für die Tests an Prüfkörpern wurden folgende Testverfahren angewandt:
- Shore-A-Härte bei Raumtemperatur (RT) und bei 70°C gemäß DIN 53 505
- Spannungswerte bei 50 % und 300% statischer Dehnung bei Raumtemperatur (RT) gemäß DIN 53 504
- Rückprallelastizität bei Raumtemperatur (RT) gemäß DIN 53 512

**Tabelle 1**

| **Bestandteile** | **Einheit** | **V1** | **V2** | **V3** | **V3** |
|---|---|---|---|---|---|
| ESBR^{a} | phr | 137,5 | 137,5 | 137,5 | 137,5 |
| Kieselsäure^{b} | phr | 60 | 60 | 60 | 60 |
| Weiterer hydroxylgruppenhaltiger | phr | - | - | 30 | 30 |
| Füllstoff | | | | | |
| Weichmacher | phr | 110 | 110 | 110 | 110 |
| Alterungsschutzmittel und | phr | 3 | 3 | 3 | 3 |
| Ozonschutzmittel | | | | | |
| ZnO und Stearinsäure | phr | 4,5 | 4,5 | 4,5 | 4,5 |
| Silan | phr | 7 | 7 | 7 | 7 |
| Thiurambeschleuniger^{d} | phr | - | 0,5 | - | 0,5 |
| Weitere Beschleuniger | phr | 2,9 | 2,9 | 2,9 | 2,9 |
| Schwefel | phr | 1,5 | 1,5 | 1,5 | 1,5 |

| **Eigenschaften** | | | | | |
|---|---|---|---|---|---|
| Härte bei RT minus Härte bei 70°C | Shore A | 10,4 | 11,3 | 6,1 | 4,6 |
| Spannungswert 300% dividiert durch | N/mm² | 1,8 | 1,92 | 1,89 | 2,12 |
| Spannungswert 50% | | | | | |
| Rückprallelastizität bei RT | MPa | 16,9 | 18,4 | 14,6 | 14,5 |

| | | | | | |
|---|---|---|---|---|---|
| ^{a}ESBR, BUNA SB 1739, DOW Chemical ^{b}Ultrasil^{®} VN 3, Fa.Degussa ^{c}keramische Mikrohohlkugeln, 3M Zeeospheres G-200 ^{d}TBZTD, Fa. Flexsys | | | | | |

Die Differenz der Härte bei Raumtemperatur und der Härte bei 70°C zeigt die thermische Erweichung einer Kautschukmischung an. Je kleiner der Wert, desto geringer stellt sich die thermische Erweichung dar. Das Dämpfungsverhalten einer Kautschukmischung zeigt sich anhand des Wertes für die Rückprallelastizität. Auch hier gilt, je kleiner der Wert, desto besser das Dämpfungsverhalten. Die Verstärkung wiederum zeigt sich anhand des Verhältnisses eines Spannungswertes bei hohen Dehnungen, wie z.B. 300%, zu einem Spannungswert bei geringer Dehnung, wie z.B. 50%. Der verstärkende Effekt wird durch ein erhöhtes Verhältnis aufgezeigt.

Aus der Tabelle 1 wird ersichtlich, dass durch eine erfindungsgemäße Mischung E eine deutliche Verbesserung aller oben genannten Eigenschaften möglich ist und dadurch der bereits beschriebene Zielkonflikt nicht nur entschärft, sondern sogar gelöst wird.

## Patentansprüche

1. Kautschukmischung, **gekennzeichnet durch** folgende Zusammensetzung:
- 30 - 100 phr zumindest eines Dienkautschukes;
- 0,1 - 10 phr zumindest eines Vulkanisationsbeschleunigers ausgewählt aus der Gruppe, enthaltend: Thiazolbeschleuniger und / oder Mercaptobeschleuniger, Sulfenamidbeschleuniger und / oder Guanidinbeschleuniger und /oder Thiurambeschleuniger und / oder Dithiocarbamatbeschleuniger und / oder Aminbeschleuniger und / oder Thioharnstoffe und / oder sonstige Beschleuniger;
- 0 - 150 phr zumindest einer amorphen und / oder Fällungskieselsäure;
- 5 - 100 phr zumindest eines weiteren hydroxylgruppenhaltigen Füllstoffes;
- 0,1 - 20 phr zumindest eines Kupplungsagenz;
- 1 - 100 phr zumindest eines Rußes;
- 2 - 200 phr weitere Zusatzstoffe.

2. Kautschukmischung nach Anspruch 1, **dadurch gekennzeichnet, dass** zumindest ein Dienkautschuk ausgewählt ist aus der Gruppe, bestehend aus natürlichem Polyisopren und / oder synthetischem Polyisopren und / oder Polyethylen und / oder Polybutadien und / oder Styrol-Butadien-Copolymer und / oder lösungspolymerisiertes Styrol-Butadien-Copolymer und / oder emulsionspolymerisiertes Styrol-Butadien-Copolymer und / oder Styrol-Isopren-Butadien-Terpolymer und / oder Butylkautschuk und / oder Halobutylkautschuk und / oder Ethylen-Propylen-Dien-Kautschuk und / oder Chloropren-Kautschuk.

3. Kautschukmischung nach Anspruch 1 oder 2, **dadurch gekennzeichnet, dass** sie 0 bis 30 phr natürliches und / oder synthetisches Polyisopren enthält.

4. Kautschukmischung nach Anspruch 3, **dadurch gekennzeichnet, dass** sie wenigstens 0,1 phr, insbesondere wenigstens 0,5 phr, natürliches und / oder synthetisches Polyisopren enthält.

5. Kautschukmischung nach einem der Ansprüche 1 bis 3, **dadurch gekennzeichnet, dass** sie 0 bis 50 phr Butadienkautschuk enthält.

6. Kautschukmischung nach Anspruch 5, **dadurch gekennzeichnet, dass** sie wenigstens 0,1 phr, insbesondere wenigstens 0,5 phr, Butadienkautschuk enthält.

7. Kautschukmischung nach einem der Ansprüche 1 bis 6, **dadurch gekennzeichnet, dass** sie 0 bis 100 phr Styrol-Butadienkautschuk enthält.

8. Kautschukmischung nach Anspruch 7, **dadurch gekennzeichnet, dass** sie wenigstens 0,1 phr, insbesondere wenigstens 0,5 phr, Styrol-Butadienkautschuk enthält.

9. Kautschukmischung nach einem der Ansprüche 1 bis 8, **dadurch gekennzeichnet, dass** der Vulkanisationsbeschleuniger zumindest ein Beschleuniger aus der Gruppe der Thiurambeschleuniger ist.

10. Kautschukmischung nach Anspruch 9, **dadurch gekennzeichnet, dass** der Vulkanisationsbeschleuniger aus der Gruppe der Thiurambeschleuniger Tetrabenzylthiuramdisulfid (TBzTD) ist.

11. Kautschukmischung nach einem der Ansprüche 1 bis 10, **dadurch gekennzeichnet, dass** der Mengenanteil des Thiurambeschleunigers 0,1 bis 5 phr beträgt.

12. Kautschukmischung nach einem der Ansprüche 1 bis 11, **dadurch gekennzeichnet, dass** die Menge der amorphen und / oder Fällungskieselsäure 0 - 120 phr beträgt.

13. Kautschukmischung nach einem der Ansprüche 1 bis 12, **dadurch gekennzeichnet, dass** die Menge der amorphen und / oder Fällungskieselsäure wenigstens 0,1 phr, insbesondere wenigstens 0,5 phr, beträgt.

14. Kautschukmischung nach einem der Ansprüche 1 bis 13, **dadurch gekennzeichnet, dass** die Menge des weiteren hydroxylgruppenhaltigen Füllstoffes 10 - 80 phr beträgt.

15. Kautschukmischung nach Anspruch 14, **dadurch gekennzeichnet, dass** die Menge des weiteren hydroxylgruppenhaltigen Füllstoffes 10 - 50 phr beträgt.

16. Kautschukmischung nach einem der Ansprüche 1 bis 15, **dadurch gekennzeichnet, dass** der weitere hydroxylgruppenhaltige Füllstoff keramische Mikrohohlkugeln sind.

17. Kautschukmischung nach Anspruch 16, **dadurch gekennzeichnet, dass** die keramischen Mikrohohlkugeln Alumosilikat-Keramiken sind.

18. Kautschukmischung nach Anspruch 16 oder 17, **dadurch gekennzeichnet, dass** die keramischen Mikrohohlkugeln eine Mohs-Härte zwischen 6 und 8 haben.

19. Kautschukmischung nach einem der Ansprüche 16 bis 18, **dadurch gekennzeichnet, dass** die keramischen Mikrohohlkugeln einen ph-Wert von mindestens 3 haben, gemessen nach ASTM E70.

20. Kautschukmischung nach einem der Ansprüche 16 bis 19, **dadurch gekennzeichnet, dass** die keramischen Mikrohohlkugeln eine Dichte zwischen 2,0 und 2,6 g / cm³ haben.

21. Kautschukmischung nach einem der Ansprüche 16 bis 20, **dadurch gekennzeichnet, dass** 95% der keramischen Mikrohohlkugeln eine Partikelgröße kleiner oder gleich 25µ haben.

22. Kautschukmischung nach einem der Ansprüche 1 bis 15, **dadurch gekennzeichnet, dass** der weitere hydroxylgruppenhaltige Füllstoff Hohlkugeln aus Glas sind.

23. Kautschukmischung nach Anspruch 22, **dadurch gekennzeichnet, dass** die Hohlkugeln aus Glas eine Dichte zwischen 0,2 und 0,7 g / cm³ haben.

24. Kautschukmischung nach Anspruch 22 oder 23, **dadurch gekennzeichnet, dass** der mittlere Durchmesser, d₅₀, der Hohlkugeln aus Glas zwischen 15 und 60 nm beträgt.

25. Kautschukmischung nach einem der Ansprüche 1 bis 15, **dadurch gekennzeichnet, dass** der weitere hydroxylgruppenhaltige Füllstoff ein Mikrogel ist.

26. Kautschukmischung nach Anspruch 25, **dadurch gekennzeichnet, dass** das Mikrogel eine Dichte zwischen 0,9 und 1,1 g / cm³ hat.

27. Kautschukmischung nach Anspruch 25 oder 26, **dadurch gekennzeichnet, dass** der mittlere Durchmesser, d₅₀, des Mikrogels zwischen 15 und 60 nm beträgt.

28. Kautschukmischung nach einem der Ansprüche 1 bis 27, **dadurch gekennzeichnet, dass** die Menge des Rußes 5 - 80 phr beträgt.

29. Verwendung einer Kautschukmischung nach einem der Ansprüche 1 bis 28 zur Herstellung eines Reifens.

30. Verwendung einer Kautschukmischung nach Anspruch 29 zur Herstellung des Laufstreifens und / oder einer Body-Mischung eines Reifens.

31. Verwendung einer Kautschukmischung nach einem der Ansprüche 1 bis 28 zur Herstellung eines Gurtes und / oder eines Riemens.
